# EUROPÄISCHE PATENTSCHRIFT

(11) **EP 3 184 706 B1**
(45) Veröffentlichungstag und Bekanntmachung des Hinweises auf die Patenterteilung: **04.12.2019**
(21) Anmeldenummer: 16204223.8
(22) Anmeldetag: 15.12.2016
(51) Int. Cl.: E03C 1/06

(54) **HALTEVORRICHTUNG MIT ENTLANG EINER HALTESTANGE VERSCHIEBLICHEM HALTESCHIEBER**
HOLDING DEVICE WITH A HOLDING SLIDER SLIDING ALONG A HOLDING BAR
DISPOSITIF DE RETENUE COMPRENANT UN REGISTRE COULISSANT LE LONG D'UNE BARRE DE RETENUE

(30) Priorität: 23.12.2015 DE 102015226624
(43) Veröffentlichungstag der Anmeldung: 28.06.2017
(73) Patentinhaber: Hansgrohe SE, 77761 Schiltach (DE)
(72) Erfinder: KALMBACH, Marc, 78733 Aichhalden (DE); ZAPF, David, 77791 Berghaupten (DE)
(74) Vertreter: Patentanwälte Ruff, Wilhelm, Beier, Dauster & Partner mbB

(56) Entgegenhaltungen:
- EP-A1- 0 965 699
- DE-A1- 2 342 613
- DE-A1- 2 742 112
- DE-A1- 10 303 169

## Beschreibung

Die Erfindung bezieht sich auf eine Haltevorrichtung, insbesondere für eine Handbrause nach dem Oberbegriff des Anspruchs 1.

Derartige Haltevorrichtungen werden bspw. dafür verwendet, eine Handbrause an einer vertikalen Wandstange einer Duschkabine höhenverstellbar zu halten.

Aus der Patentschrift DE 23 42 613 B2 ist eine Haltevorrichtung mit einem entlang einer Haltestange verschieblichen Halteschieber mit einer lösbaren Klemmvorrichtung zum Festlegen des Halteschiebers an der Haltestange.bekannt, wobei der Halteschieber als Gleitstück mit einer Einrichtung zum Aufstecken von Handbrausenausgebildet ist. Das Gleitstück ist an einer Wandstange festlegbar und in seiner Höhenlage verstellbar. In einer Aussparung des Gleitstücks sind zwischen dem Gleitstück und der Wandstange federnd verspannbare Klemmstücke angeordnet, die oben und unten aus dem Gleitstück mit einem jeweiligen Betätigungsflansch vorstehen. Durch Druck auf die Betätigungsflansche des Klemmstücks kann eine Bedienperson eine Klemmung des Gleitstücks aufheben und das Gleitstück verschieben.

Die Offenlegungsschrift DE 103 03 169 A1 offenbart eine ähnliche Haltevorrichtung, bei der die Klemmvorrichtung von zwei federbelastet an die Haltestange andrückenden elastischen Bändern gebildet ist, die mittels gegenüberliegender Drucktasten von ihrem an die Haltestange andrückenden Zustand gelöst werden können.

Die Offenlegungsschrift DE 27 42 112 A1 offenbart eine Haltevorrichtung der eingangs genannten Art für eine Handbrause, wobei als Bedieneinheit eine in die Klemmbacken eingeschraubte Schraube und ein auf der Schraube drehbeweglich angeordneter Drehknopf fungieren.

Bei einer in der Offenlegungsschrift EP 0 965 699 A1 offenbarten Haltevorrichtung z.B. für eine Handbrause fungiert als lösbare Klemmvorrichtung zum Festlegen eines verschieblichen Halteschiebers an der Haltestange ein geschlossener, in radialer Richtung flexibler Klemmring, der aus mehreren in Umfangsrichtung beabstandeten Druckstücken besteht, die durch flexible Elemente miteinander verbunden sind. Als Bedieneinheit für diese Klemmvorrichtung dient ein relativ zum Klemmring drehbarer Spannring, wobei der Klemmring und der Spannring mit in Umfangsrichtung zusammenwirkenden Keilflächen versehen sind.

Der Erfindung liegt das technische Problem zugrunde, eine Haltevorrichtung der eingangs genannten Art zu schaffen, bei der sich der Halteschieber in einer vorteilhaften Weise festlegen und verlagern lässt.

Die Erfindung löst dieses technische Problem durch die Bereitstellung einer Haltevorrichtung mit den Merkmalen des Anspruchs 1. Vorteilhafte sowie bevorzugte Ausgestaltungen der Erfindung sind Gegenstand der weiteren Ansprüche. Der Wortlaut der Ansprüche wird durch ausdrückliche Bezugnahme hiermit zum Inhalt der Beschreibung gemacht.

Bei der erfindungsgemäßen Haltevorrichtung weist die Klemmvorrichtung zwei elastisch von einer klemmspaltverringernden Klemmposition in eine klemmspaltvergrößernde Verschiebeposition aufspreizbare Klemmbacken auf, welche die Haltestange wenigstens teilweise umgreifen und zwischen sich einen Klemmspalt definieren. Des Weiteren beinhaltet die Haltevorrichtung eine Bedieneinheit, die in einer Bedienposition die Klemmbacken in der klemmspaltenvergrößernden Verschiebeposition hält, während die Klemmbacken in einer Ausgangsposition der Bedieneinheit ihre Klemmposition einnehmen. In der Bedienposition der von einer Bedienperson betätigten Bedieneinheit sind die Klemmbacken der Klemmvorrichtung gespreizt und ermöglichen eine Verlagerung der Haltevorrichtung entlang der Haltestange. In der Ausgangsposition der Bedieneinheit werden die Klemmbacken und somit der Halteschieber gegen die Haltestange verklemmt. Typischerweise bewegen sich die Klemmbacken dazu in einer Backenaufspreizrichtung bzw. Backenklemmrichtung im Wesentlichen senkrecht zu einer Halteschieber-Verschieberichtung voneinander weg bzw. aufeinander zu.

Gemäß einem Aspekt der Erfindung weist die Bedieneinheit ein Keilelement auf, das sich verschiebbar in den Klemmspalt hinein erstreckt. Das Keilelement kann sich z.B. an einen für die Bedienperson zugänglichen Bedienkopf der Bedieneinheit anschließen, sei es als einstückiger Bestandteil des Bedienkopfes oder als ein mit diesem verklebtes oder verschweißtes oder anderweitig verbundenes Element, es kann jedoch auch ein separates Bauteil sein, das über den Bedienkopf betätigt wird. Der Keilwinkel kann so gewählt werden, dass keine Selbsthemmung entsteht, so dass das Keilelement nach einer abgeschlossenen Betätigung des Bedienkopfes von der klemmspaltverringernden Federkraft des Federrings in seine Ausgangsposition zurückgestellt wird.

Gemäß einem weiteren Aspekt der Erfindung weist die Bedieneinheit ein exzentrisches Rotationselement auf, dessen Exzenterbewegung auf die Klemmbacken wirkt. Die Bedieneinheit kann dabei z.B. einen Bedienkopf mit einem mit ihm einteilig oder anderweitig drehfest verbundenen exzentrischen Rotationskörper aufweisen. Die Bedieneinheit kann in diesem Fall durch eine Drehbewegung mit dem in dem Klemmspalt der Klemmvorrichtung angeordneten exzentrischen Rotationskörper eine Aufspreizung der Klemmbacken bewirken. In der Ausgangsposition der Bedieneinheit befindet sich ein relativ schmaler Bereich des Rotationselements, der nicht breiter ist als der Klemmspalt in der Klemmposition, im Klemmspalt. In der Bedienposition befindet sich ein relativ breiter Bereich des Rotationselements, der breiter als der Klemmspalt in der Klemmposition ist und den Klemmspalt auseinanderdrückt, im Klemmspalt, so dass eine Verschiebung des Halteschiebers freigegeben wird. Durch eine Drehung der Bedieneinheit um einen entsprechenden Winkel kann zwischen beiden Positionen umgeschaltet werden.

In Ausgestaltung der Erfindung weist die Klemmvorrichtung ein elastisches Element auf, das die Klemmbacken in ihre klemmspaltverringernde Klemmposition vorspannt. Alternativ können die Klemmbacken eigenelastisch bzw. federnd ausgeführt sein, was ein separates elastisches Element entbehrlich machen kann.

In weiterer Ausgestaltung der Erfindung weist das elastische Element einen Federring auf, der die Klemmbacken umgibt. Der Federring kann auf die Klemmbacken der Klemmvorrichtung wirken und somit in der Ausgangsposition der Bedieneinheit den Halteschieber an der Haltestange festgeklemmt halten. Der Federring kann geschlossen oder offen ausgeführt sein. Vorteilhaft ergibt sich hieraus, dass in der unbelasteten Ausgangsposition der Bedieneinheit die Klemmwirkung des Halteschiebers gegeben ist, so dass ein selbsttätiges, von der Bedienperson unbeabsichtigtes Verrutschen verhindert wird. Da der Federring mit Abstand zur Haltestange an den Klemmbacken angeordnet werden kann, können die Klemmbacken als Hebel wirken, was die Anpresskraft an der Haltestange erhöht. Dies führt zu einer erhöhten Klemmkraft bzw. Bremsleistung der Haltevorrichtung an der Haltestange.

In Ausgestaltung der Erfindung verläuft eine Bewegungsrichtung des Keilelements senkrecht zu der Backenaufspreizrichtung. Dadurch kann eine Keilfläche des Keilelementes genutzt werden, um die Klemmbacken aufzuspreizen und eine Verlagerung der Haltevorrichtung zu ermöglichen.

In einer entsprechenden Realisierung kann hierbei der Bedienkopf linear beweglich mit einer zur Verschiebungsrichtung des Keilelements parallelen Bewegungsrichtung angeordnet sein. In diesem Fall ist eine gemeinsame oder jedenfalls parallele Wirklinie von Bedienkopf und Keilelement gegeben. Dies ermöglicht eine besonders einfache Bauart mit relativ wenigen Bauteilen.

In anderer Ausgestaltung der Erfindung ist der Bedienkopf mit zur Keilelement-Bewegungsrichtung nicht-paralleler Bewegungsrichtung angeordnet und weist ein Umlenkelement auf, das die Bedienkopf-Bewegungsrichtung in die Keilelement-Bewegungsrichtung umlenkt. Durch eine solche Anordnung ergeben sich große Gestaltungsfreiräume und vielfache Möglichkeiten einer Positionierung des Bedienkopfes.

Die Verwendung des Keilelements ermöglicht eine hohe Aufspreizkraft, die auf die Klemmbacken in der klemmspaltvergrößernden Richtung wirkt, bei relativ geringer, vom Benutzer aufzubringender Betätigungskraft.

In weiterer Ausgestaltung der Erfindung weist die Haltevorrichtung ein elastisches Rückstellelement auf, das auf das Keilelement eine in Richtung aus dem Klemmspalt heraus wirkende Rückstellkraft ausübt. Dies unterstützt die Rückkehrbewegung der Bedieneinheit von ihrer Bedienposition in ihre Ausgangsposition und damit die Rückkehrbewegung der Klemmvorrichtung von ihrer Verschiebeposition in ihre Klemmposition.

Vorteilhafte Ausführungsformen der Erfindung sind in den Zeichnungen dargestellt und werden nachfolgend beschrieben. Dabei zeigen:
- Fig. 1: eine Seitenansicht einer an einer Haltestange angebrachten Haltevorrichtung mit einem Keilelement und einer stirnseitigen Drucktaste,
- Fig. 2: eine Längsschnittansicht längs einer Linie II-II von Fig. 1,
- Fig. 3: eine Seitenansicht entsprechend Fig. 1 für eine Variante mit seitlich angeordneter Drucktaste,
- Fig. 4: eine Längsschnittansicht entlang einer Linie IV-IV von Fig. 3,
- Fig. 5: eine Seitenansicht entsprechend Fig. 1 für eine Variante mit unterseitiger Drucktaste und einer Rückstellfeder,
- Fig. 6: eine Längsschnittansicht entlang einer Linie VI-VI von Fig. 5,
- Fig. 7: eine Querschnittsansicht entlang einer Linie VII-VII von Fig. 5,
- Fig. 8: eine Seitenansicht entsprechend Fig. 1 für eine Variante mit einem exzentrischen Rotationselement und Drehknopf und
- Fig. 9: eine Querschnittsansicht entlang einer Linie IX-IX von Fig. 8.

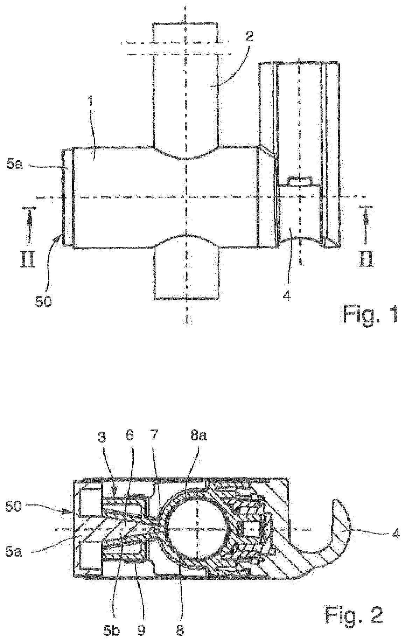

Die in den Fig. 1 und 2 gezeigte Haltevorrichtung dient zum höhenverstellbaren Halten einer Handbrause an einer Haltestange 2, wie einer vertikalen Wandstange einer Duscheinrichtung. Die Haltevorrichtung weist einen Halteschieber 1 mit einer lösbaren Klemmvorrichtung 3 zum Festlegen des Halteschiebers 1 an der Haltestange 2, eine Bedieneinheit 50 mit einem Bedienkopf 5a und eine Brausenaufnahme 4 auf. Die Brausenaufnahme 4 dient wie üblich der Aufnahme der nicht dargestellten Handbrause. Die Klemmvorrichtung 3 ist in einem zylindrischen Gehäuse des Halteschiebers 1 untergebracht.

Wie aus Fig. 2 ersichtlich, ist der Bedienkopf hier als Drucktaste 5a ausgebildet, an die sich einstückig ein Fußteil 5b der dadurch gebildeten Bedieneinheit 50 anschließt. Die Drucktaste 5a ist an einer Stirnseite des zylindrischen Halteschiebergehäuses entlang einer Längsachse desselben beweglich angeordnet. Der Fußteil 5b weist ein Keilelement 6 auf, das sich entlang seiner Längsachse verschiebbar in einen Klemmspalt 7 hinein erstreckt. Die Klemmvorrichtung 3 weist zwei Klemmbacken 8a, 8b, welche die Haltestange 2 wenigstens teilweise umgreifen und zwischen sich den Klemmspalt 7 definieren, und ein elastisches Element 9 auf, das die Klemmbacken 8a, 8b in eine klemmspaltverringernde Klemmposition vorspannt.

Das elastische Element 9 ist von einem Federring gebildet, der die Klemmbacken 8a, 8b umgibt. Der Federring bewirkt in einer Entlastungsposition des Bedienkopfes 5a, die der in der Fig. 2 gezeigten klemmspaltverringernden Klemmposition der Klemmbacken 8a, 8b entspricht, ein festklemmendes Andrücken der Klemmbacken 8a, 8b an die Haltestange 2. In einer Bedienposition, in der das Keilelement 6 den Klemmspalt 7 aufweitet, liegen die Klemmbacken 8a, 8b nicht mehr klemmend an der Haltestange 2 an. Somit ist die Klemmvorrichtung 3 samt der Haltevorrichtung gegenüber der Haltestange 2 verschiebbar.

Die Klemmbacken 8a, 8b definieren mit je einem annähernd halbkreisförmigen Abschnitt eine Durchführungsöffnung für die Haltestange 2. Auf einer Seite der halbkreisförmigen Abschnitte sind die Klemmbacken 8a, 8b geschlossen, auf der anderen Seite unter Bildung des Klemmspalts 7 offen. An der geschlossenen Seite der Klemmbacken 8a, 8b geht das zylindrische Halteschiebergehäuse stirnseitig in die Brausenaufnahme 4 über, auf der ihr gegenüberliegenden Gehäusestirnseite befindet sich die Bedieneinheit 50 mit der Drucktaste 5a. Der Klemmspalt 7 und eine Längsachse des zylindrischen Halteschiebergehäuses verlaufen senkrecht zu einer Längsachse der Haltestange 2. Die Klemmbacken 8a, 8b weisen auf einer radial äußeren Seite je einen Fortsatz auf, die als Hohlkörper ausgebildet sind und gemeinsam einen Sitz für den Federring 9 ausbilden. Eine Innenseite der Klemmbacken 8a, 8b formt den Klemmspalt 7 als eine keilförmige Aussparung, die sich in Richtung der Haltestange 2 verjüngt. Der Fußteil 5b weist an einer dem Bedienkopf 5a abgewandten Seite einen zu der Aussparung korrespondierenden Doppelkeil als das entsprechenden Keilelement 6 auf.

Um die Haltevorrichtung entlang der Haltestange 2 zu verlagern, übt eine Bedienperson Druck auf den tastenförmigen Bedienkopf 5a aus. Die Bedieneinheit 50 wird dadurch relativ zum Halteschiebergehäuse in Richtung der Haltestange 2 in eine Bedienposition verlagert und das Keilelement 6 bewegt sich entlang einer Längsachse axial weiter in den Klemmspalt 7 zwischen den Klemmbacken 8a, 8b hinein und drückt diese gegen die vorspannende Federkraft des Federrings 9 radial auseinander. Eine Keilelement-Bewegungsrichtung verläuft somit senkrecht zu einer Backenaufspreizrichtung. Die Bedieneinheit 50 hält folglich in der Bedienposition die Klemmbacken 8a, 8b entgegen der radial nach innen wirkenden Vorspannung des elastischen Elements 9 in einer klemmspaltvergrößernden Verschiebeposition. Die Klemmwirkung der Klemmvorrichtung 3 ist aufgehoben und die Haltevorrichtung kann entlang der Haltestange 2 höhenverlagert werden. Bei einer Entlastung des Bedienkopfes 5a wird die Klemmwirkung der Klemmvorrichtung 3 wieder aktiviert, indem der Federring 9 die Klemmbacken 8a, 8b aufeinander zu drückt, so dass das Keilelement 7 zurückbewegt wird und die Klemmbacken 8a, 8b die Haltevorrichtung wieder an der Haltestange 2 festklemmen.

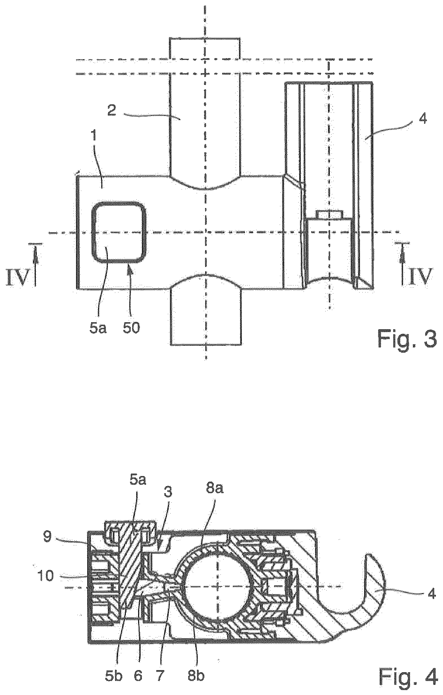

In den Fig. 3 bis 9 sind weitere Ausführungsbeispiele der erfindungsgemäßen Haltevorrichtung gezeigt, wobei im Folgenden hauptsächlich auf die Unterschiede der Ausführungsbeispiele zu demjenigen der Fig. 1 und 2 eingegangen wird. Funktionsgleiche Teile tragen zum leichteren Verständnis gleiche Bezugszeichen und es kann insoweit auch auf die obige Beschreibung zu den Fig. 1 und 2 verwiesen werden.

Im Unterschied zu der in den Fig. 1 und 2 dargestellten Haltevorrichtung weist das Ausführungsbeispiel der Fig. 3 und 4 zusätzlich ein Umlenkelement 10 auf und die Drucktaste ist seitlich, d.h. umfangsseitig, am zylindrischen Halteschiebergehäuse radial beweglich angeordnet. Dabei dient eine Schrägfläche des Fußteils 5b der Bedieneinheit 50 als Umlenkelement 10 und das Keilelement 6 ist als separates Bauteil ausgeführt und besitzt eine mit derjenigen des Fußteils 5b zusammenwirkende Schrägfläche. Die Klemmbacken 8a, 8b weisen an der offenen Seite Fortsätze auf, die eine Führungsfläche für die Bedienbewegung der Bedieneinheit 50 bereitstellen, speziell für deren Fußteil 5b. Der Federring 9 befindet sich mit relativ großem Abstand zur Haltestange 2 auf der ihr abgewandten Seite der Bedieneinheit 50, wodurch er eine entsprechend große Hebelwirkung für das Andrücken der Klemmbacken 8a, 8b an die Haltestange hat.

Der Bedienkopf 5a und das Umlenkelement 10 sind einstückig ausgeführt und ihre Bewegungsrichtung verläuft nicht-parallel, im gezeigten Beispiel speziell senkrecht, zur Keilelement-Bewegungsrichtung und parallel zur Backenaufspreizrichtung. Das Fußteil 5b weist an einer der Haltestange 2 zugewandten Seite eine keilartige Verjüngung auf. Die keilartige Verjüngung grenzt an eine der Haltestange 2 abgewandte Seite einer Schrägfläche des Keilelements 6 an, welches auf einer der Haltestange zugewandten Seite den Doppelkeil aufweist, der in den Klemmspalt 7 hineinragt. Auf einer der Haltestange 2 abgewandten Seite des Fußteils 5b weist das Halteschiebergehäuse ein Gegenlager auf, das die Bewegung des Umlenkkeils 10 und des Keilelements 6 stützt.

Bei der Betätigung des Bedienkopfs 5a senkrecht zu einer Längsachse des Halteschiebers 1, in Fig. 3 nach unten, gleitet das mit ihm einstückige Umlenkelement 10 an der der Haltestange 2 abgewandten Keilfläche des Keilelements 6 entlang und verschiebt das Keilelement 6 in Richtung der Haltestange 2, d.h. in Fig. 3 nach rechts. Somit wird die Bewegungsrichtung um ca. 90° umgelenkt. Das Keilelement 6 wirkt dadurch, wie zu Fig. 1 bereits erörtert, klemmspaltvergrößernd auf den Klemmspalt 7 und es wird eine Verschiebung der Haltevorrichtung in vertikaler Richtung ermöglicht.

Bei Entlastung des Bedienkopfes 5a werden die Klemmbacken 8a, 8b von der Vorspannung des elastischen Elements 9 wieder in ihre klemmspaltverringernde Ausgangsposition zurückgestellt. Dabei wird das Keilelement 6 in den Fig. 3 und 4 nach links gedrückt und wirkt auf die keilartige Verjüngung des Umlenkelements 10, wodurch dieses in den Fig. 3 und 4 nach oben in seine Ausgangsposition verschoben wird.

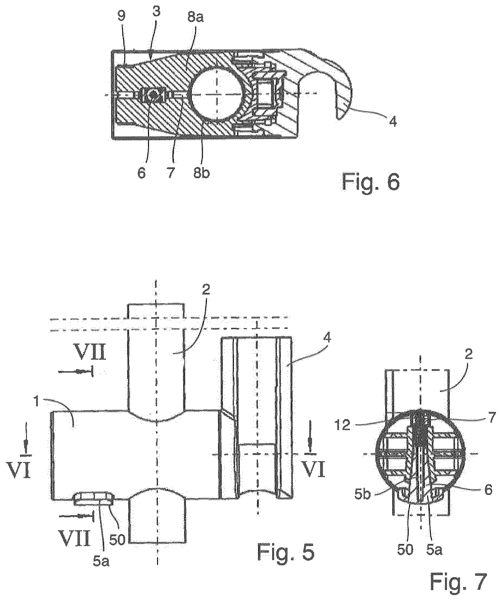

Das in den Fig. 5 bis 7 dargestellte Ausführungsbeispiel der Haltevorrichtung ist hinsichtlich des in den Fig. 1 und 2 gezeigten Ausführungsbeispiels dahingehend modifiziert, dass der Bedienkopf 5a, hier wieder in Form einer Drucktaste, unterseitig am Umfang des zylindrischen Halteschiebergehäuses radial beweglich angeordnet ist und demgemäß die Keilelement-Bewegungsrichtung parallel zur Längsachse der Haltestange 2 verläuft. Zudem weist dieses Ausführungsbeispiel ein elastisches Rückstellelement auf, hier beispielhaft in Form einer Rückstellfeder 12, die sich am Halteschiebergehäuse abstützt und rückstellend, d.h. entgegen der Druckbetätigungsrichtung, auf ein Stirnende des mit der Drucktaste 5a einteiligen Keilelements 6 wirkt. Das Keilelement 6 ist hierbei in Gehäuselängsrichtung zwischen der Haltestange 2 und dem Federring 9 angeordnet, d.h. der Federring 9 befindet sich auf der der Haltestange 2 abgewandten Seite des Keilelements 6.

Wenn der Bedienkopf 5a von der Bedienperson mit Druck beaufschlagt wird, wird das einstückig am Bedienkopf 5a angeformte Keilelement 6 in den Klemmspalt hineingedrückt und drückt die Klemmbacken 8a, 8b auseinander und komprimiert zudem die Rückstellfeder 12. Die Haltevorrichtung ist somit entlang der Haltestange 2 verlagerbar. Entlastet die Bedienperson den Bedienkopf 5a, wird das Keilelement 6 unter zusätzlicher Unterstützung durch die Rückstellfeder 12 in seine Ausgangsposition zurückgestellt, wobei sich die Klemmbacken 8a, 8b unterstützt durch die Federkraft des Federrings 9 wieder aneinander annähern und ihre Klemmwirkung auf die Haltestange 2 entfalten.

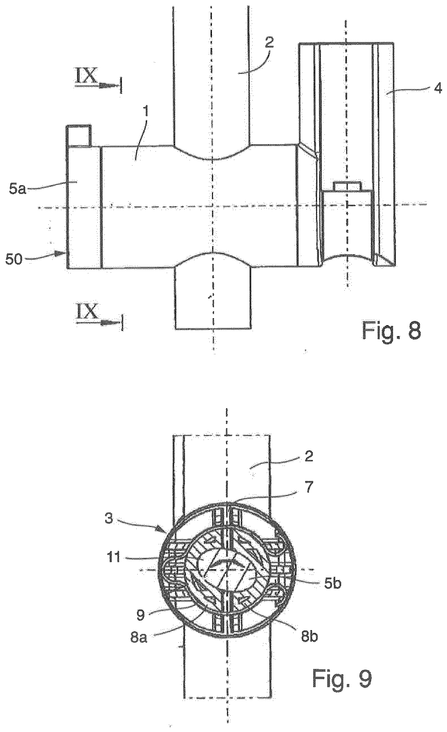

Das in den Fig. 8 und 9 dargestellte Ausführungsbeispiel der Haltevorrichtung ist gegenüber den Ausführungsbeispielen der Fig. 1 bis 7 dahingehend modifiziert, dass die Bedieneinheit 50 ein exzentrisches Rotationselement 11 aufweist, dessen Exzenterdrehbewegung auf die Klemmbacken 8a, 8b wirkt, die wiederum von dem als offener Federring ausgeführten elastischen Element 9 radial nach innen vorgespannt werden. Das exzentrische Rotationselement 11 ist drehfest mit dem in dieser Ausführung an der Gehäusestirnseite drehbeweglich angeordneten Bedienkopf 5a verbunden und stellt dessen Fußteil 5b dar, wobei seine Drehachse parallel zur Gehäuselängsachse ist. Das exzentrische Rotationselement 11 ist in dem Klemmspalt 7 angeordnet ist und seine Rotationsachse verläuft senkrecht zur Backenaufspreizrichtung und senkrecht zur Haltestangen-Längsachse. Die Klemmbacken 8a, 8b weisen in einem Bereich des Klemmspalts 7 eine ovale Aussparung auf. In der ovalen Aussparung ist das korrespondierend zu der Aussparung oval gestaltete exzentrische Rotationselement 11 angeordnet.

In der Klemmposition liegt ein relativ kleiner, schmalster Außendurchmesser des exzentrischen Rotationselements 11 an einem relativ kleinen, schmalsten Innendurchmesser der Aussparung der Klemmbacken 8a, 8b an. Das elastische Element 9 hält die Klemmbacken 8a, 8b in der klemmspaltverringernden Position und die Haltevorrichtung ist an der Haltestange 2 festgelegt.

Wird der somit in diesem Beispiel als Drehknopf realisierte Bedienkopf 5a um seine Rotationsachse von der Ausgangsposition in die Bedienposition gedreht, so wird der Klemmspalt 7 von einem relativ breiten Bereich des exzentrischen Rotationselements 11, der breiter ist als die schmalste Stelle der ovalen Aussparung in den Klemmbacken 8a, 8b, gegen die Federkraft des Federrings 9 auseinandergedrückt. Die Klemmwirkung der Klemmvorrichtung 3 wird aufgehoben und die Haltevorrichtung wird somit entlang der Haltestange 2 verlagerbar. Nach Verlagerung der Haltevorrichtung wird der Bedienkopf 5a wieder von der Bedienposition in die Klemmposition weitergedreht oder zurückgedreht, wodurch die Haltevorrichtung wieder ihre Klemmposition an der Haltestange 2 einnimmt.

In den gezeigten Ausführungsbeispielen beinhaltet das elastische Element eine radial wirkende Druckringfeder. Alternativ kann das elastische Element eine Zugfeder aufweisen, die zwischen den Klemmbacken wirkt. Weiterhin alternativ kann das elastische Element eine Druckfeder aufweisen, die auf der klemmspaltabgewandten Seite der Klemmbacken wirkt, bspw. eine Schenkelfeder. Weiterhin können die Klemmbacken selbst ein federndes Material aufweisen und dadurch eigenelastisch ausgeführt sein, so dass eventuell kein separates elastisches Element nötig ist.

Ebenso ist es in alternativen Ausführungen der Erfindung möglich, dass die Haltevorrichtung ein exzentrisches Rotationselement aufweist, dessen Rotationsachse parallel zur Backenaufspreizrichtung verläuft, wobei ein Keilelement, das analog zu den Beispielen der Fig. 1 bis 7 in dem Klemmspalt der Klemmvorrichtung wirkt, von dem exzentrischen Rotationselement betätigt wird und die Klemmbacken spreizt.

Wie die oben erläuterten Ausführungsbeispiele zeigen, stellt die Erfindung eine vorteilhafte Haltevorrichtung zur Verfügung, die mit einem Minimum an Aufwand bzw. Handgriffen höhenverstellt werden kann. Zur Freigabe der Höhenverstellung der erfindungsgemäßen Haltevorrichtung ist lediglich eine Druck- oder Drehbewegung notwendig, die gut auch mit rutschigen Händen bzw. mit nur einem Finger einer Hand ausgeführt werden kann. Dabei ist jeweils nur ein Bedienelement zu drücken oder zu drehen, was wesentlich zum Komfort der Handhabung beiträgt, da nicht mehrere Bewegungsabläufe zu koordinieren sind.

## Patentansprüche

1. Haltevorrichtung, insbesondere für eine Handbrause, mit
- einem entlang einer Haltestange (2) verschieblichen Halteschieber (1) mit einer lösbaren Klemmvorrichtung (3) zum Festlegen des Halteschiebers an der Haltestange, wobei die Klemmvorrichtung zwei elastisch von einer klemmspaltverringernden Klemmposition in eine klemmspaltvergrößernde Verschiebeposition aufspreizbare Klemmbacken (8a, 8b) aufweist, welche die Haltestange (2) wenigstens teilweise umgreifen und zwischen sich einen Klemmspalt (7) definieren, und
- einer Bedieneinheit (50), die in einer Bedienposition die Klemmbacken in der klemmspaltvergrößernden Verschiebeposition hält, während die Klemmbacken in einer Ausgangsposition der Bedieneinheit ihre Klemmposition einnehmen,
**dadurch gekennzeichnet, dass**
- die Bedieneinheit (50) ein Keilelement (6) aufweist, das sich verschiebbar in den Klemmspalt (7) hinein erstreckt, oder
- die Bedieneinheit (50) ein exzentrisches Rotationselement (11) aufweist, dessen Exzenterbewegung auf die Klemmbacken wirkt.

2. Haltevorrichtung nach Anspruch 1, **dadurch gekennzeichnet, dass** die Klemmvorrichtung ein elastisches Element (9) aufweist, das die Klemmbacken in ihre klemmspaltverringernde Klemmposition vorspannt.

3. Haltevorrichtung nach Anspruch 2, **dadurch gekennzeichnet, dass** das elastische Element (9) einen Federring aufweist, der die Klemmbacken (8a, 8b) umgibt.

4. Haltevorrichtung nach einem der Ansprüche 1 bis 3, **dadurch gekennzeichnet, dass** eine Bewegungsrichtung des Keilelements (6) senkrecht zu einer Backenaufspreizrichtung verläuft.

5. Haltevorrichtung nach Anspruch 4, **dadurch gekennzeichnet, dass** die Bedieneinheit (50) einen Bedienkopf (5a) mit zur Keilelement-Bewegungsrichtung nicht-paralleler Bewegungsrichtung und ein Umlenkelement (10) aufweist, das die Bedienkopf-Bewegungsrichtung in die Keilelement-Bewegungsrichtung umlenkt.

6. Haltevorrichtung nach einem der Ansprüche 1 bis 5, **gekennzeichnet durch** ein elastisches Rückstellelement, das auf das Keilelement eine in Richtung aus dem Klemmspalt heraus wirkende Rückstellkraft ausübt.

## Claims

1. A support device, preferably for a hand-held shower, comprising
- a support slider (1), displaceable along a support bar (2), having a releasable clamping device (3) for fixing the support slider on the support bar, wherein the clamping device comprises two clamping jaws (8a, 8b) capable of being expanded elastically from a clamping position reducing a clamping gap to a sliding position increasing the clamping gap, which jaws encompass the support bar (2) at least partially and define a clamping gap (7) between them, and
- an operating unit (50) which, in an operative position, retains the clamping jaws in the clamping gap increasing sliding position, while the clamping jaws assume their clamping position in an initial position of the operating unit,
**characterized in that**
- the operating unit (50) includes a wedge element (6) extending displaceably into the clamping gap (7), or
- the operating unit (50) includes an eccentric rotational element (11), with the eccentric motion of said element acting on the clamping jaws.

2. The support device according to claim 1, **characterized in that** the clamping device includes an elastic element (9) to bias the clamping jaws into their clamping gap reducing clamping position.

3. The support device according to claim 2, **characterized in that** the elastic element (9) includes a spring washer surrounding the clamping jaws (8a, 8b).

4. The support device according to any of claims 1 to 3, **characterized in that** a direction of movement of the wedge element (6) extends perpendicular to a direction of jaw expansion.

5. The support device according to claim 4, **characterized in that** the operating unit (50) includes an operating head (5a), with a direction of movement non-parallel to the wedge element movement direction, and a redirection element (10) to change the operating head movement direction towards the wedge element movement direction.

6. The support device according to any of claims 1 to 5, **characterized by** an elastic restoring element exerting a restoring force on the wedge element, said force acting in a direction out of the clamping gap.

## Revendications

1. Dispositif de maintien, en particulier pour une douchette à main, comportant
- un curseur de maintien (1) susceptible de coulisser le long d'une barre de maintien (2) et pourvu d'un dispositif de serrage amovible (3) pour immobiliser le curseur de maintien sur la barre de maintien, le dispositif de serrage comportant deux mâchoires de serrage (8a, 8b) qui peuvent être écartées élastiquement depuis une position de serrage, réduisant l'espace de serrage, jusque dans une position de coulissement, augmentant l'espace de serrage, et qui entourent au moins partiellement la barre de maintien (2) et définissent entre eux un espace de serrage (7), et
- une unité de manœuvre (50) qui, dans une position de manœuvre, maintient les mâchoires de serrage dans la position de coulissement augmentant l'espace de serrage, tandis que les mâchoires de serrage prennent leur position de serrage dans une position initiale de l'unité de manœuvre,
**caractérisé en ce que**
- l'unité de manœuvre (50) comporte un élément cunéiforme (6) qui s'étend de manière coulissante jusque dans l'espace de serrage (7), ou
- l'unité de manœuvre (50) possède un élément rotatif excentrique (11) dont le mouvement excentrique agit sur les mâchoires de serrage.

2. Dispositif de maintien selon la revendication 1,
**caractérisé en ce que**
le dispositif de serrage comprend un élément élastique (9) qui met sous précontrainte les mâchoires de serrage dans leur position de serrage réduisant l'espace de serrage.

3. Dispositif de maintien selon la revendication 2,
**caractérisé en ce que**
l'élément élastique (9) comprend un anneau ressort qui entoure les mâchoires de serrage (8a, 8b).

4. Dispositif de maintien selon l'une des revendications 1 à 3,
**caractérisé en ce que**
une direction de mouvement de l'élément cunéiforme (6) s'étend perpendiculairement à une direction d'écartement des mâchoires.

5. Dispositif de maintien selon la revendication 4,
**caractérisé en ce que**
l'unité de manœuvre (50) présente une tête de manoeuvre (5a), ayant une direction de mouvement non parallèle à la direction de mouvement de l'élément cunéiforme, et un élément de renvoi (10) qui renvoie la direction de mouvement de la tête de manœuvre vers la direction de mouvement de l'élément cunéiforme.

6. Dispositif de maintien selon l'une des revendications 1 à 5,
**caractérisé par**
un élément de rappel élastique qui exerce une force de rappel, agissant en direction hors de l'espace de serrage, sur l'élément cunéiforme.
